# EUROPÄISCHE PATENTSCHRIFT

(11) **EP 0 597 207 B1**
(45) Veröffentlichungstag und Bekanntmachung des Hinweises auf die Patenterteilung: **19.02.1997**
(21) Anmeldenummer: 93114786.2
(22) Anmeldetag: 15.09.1993
(51) Int. Cl.: B65G 47/91, B66C 1/02

(54) **Vorrichtung für den Längenausgleich von Vakuumsaugern**
Length compensating device for a vacuum gripper
Dispositif pour compenser la longeur d'un aspirateur pour faire le vide

(30) Priorität: 12.11.1992 DE 9215404 U
(43) Veröffentlichungstag der Anmeldung: 18.05.1994
(73) Patentinhaber: Festo KG, D-73734 Esslingen (DE)
(72) Erfinder: Stoll, Kurt, D-73732 Esslingen (DE); Mall, Thomas, D-71334 Waiblingen (DE)
(74) Vertreter: Abel, Martin, Dipl.-Ing.

(56) Entgegenhaltungen:
- DD-A- 251 331
- DE-A- 3 726 289
- US-A- 4 763 941

## Beschreibung

Die Erfindung betrifft eine Vorrichtung für den Längenausgleich von Vakuumsaugern, mit einem ersten Ausgleichsteil und einem zweiten Ausgleichsteil, die einander gegenüber verdrehgesichert sind, wobei eines der Ausgleichsteile einen Innenraum aufweist, in den das andere Ausgleichsteil linear verschieblich hineinragt, und in dem eine sich zwischen den Ausgleichsteilen abstützende Druckfeder angeordnet ist und wobei das erste Ausgleichsteil an einer Handhabungseinrichtung festlegbar ist und das zweite Ausgleichsteil einen Saugkanal enthält und mit einem Saugnapf verbindbar ist, und mit einem Anschlußteil, das einen Anschlußkanal aufweist, der mit einer Vakuumquelle verbindbar ist und in jeder von den beiden Ausgleichsteilen eingenommenen relativen Verschiebestellung mit dem Saugnapf kommuniziert.

Vakuumsauger werden in der Handhabungstechnik eingesetzt, um Werkstücke oder sonstige Gegenstände zu transportieren oder zu halten. Sie besitzen einen meist flexiblen Saugnapf, dessen Saugraum mit einer Vakuumquelle verbindbar ist, so daß ein Gegenstand, auf den der Saugnapf aufgesetzt ist, angesaugt und festgehalten werden kann. Für die gewünschte Positionierung des Vakuumsaugers sorgt eine Handhabungseinrichtung beliebiger Art, z.B. ein Arbeitszylinder oder ein Roboter.

Häufig kommen auch Mehrfachanordnungen von Vakuumsaugern zum Einsatz, insbesondere im Zusammenhang mit der Handhabung großflächiger Gegenstände. Dabei ist jedoch zu gewährleisten, daß die Vakuumsauger einander gegenüber so ausgerichtet sind, daß ihre Saugnäpfe gleichzeitig auf den Gegenstand aufsetzbar sind. Da sich diese Anforderungen in der Praxis nur schwer erfüllen lassen, verwendet man meist Vakuumsauger, die mit einer Vorrichtung für den Längenausgleich gemäß der eingangs genannten Art ausgestattet sind. Eine solche Vorrichtung geht beispielsweise aus der DE 41 33 135 A1 hervor. Dort ist ein gehäuseähnliches erstes Ausgleichsteil vorgesehen, in dem ein Innenraum ausgebildet ist, der von einem zweiten rohrähnlichen Ausgleichsteil durchquert wird. Eine in dem Innenraum angeordnete Druckfeder drückt die beiden Ausgleichsteile auseinander. Am einen Ende des zweiten Ausgleichsteils ist ein Saugnapf befestigt, während sich am entgegengesetzten Ende ein Anschlußteil befindet, das über einen Schlauch od.dgl. mit einer Vakuumquelle kommuniziert. Ein durchgehender Kanal des zweiten Ausgleichsteils gewährleistet eine Verbindung zwischen dem Saugraum des Saugnapfes und einem entsprechenden Anschlußkanal des Anschlußteils. Da das zweite Ausgleichsteil in dem ersten Ausgleichsteil axial beweglich ist, findet beim Aufsetzen des Saugnapfes auf einen Gegenstand ein automatischer Längenausgleich statt. Allerdings rufen die Längenausgleichsbewegungen Relativbewegungen zwischen der angeschlossenen Handhabungseinrichtung und den für die Vakuumversorgung verantwortlichen Vakuumleitungen hervor. Abgesehen davon, daß diese dadurch erhöhten Belastungen ausgesetzt sind, besteht dabei auch die Gefahr, daß diese Vakuumleitungen infolge der Erschütterungen von den zugeordneten Anschlußteilen abspringen. Letztlich ist der Einsatz der bekannten Vorrichtungen auch nicht ganz gefahrlos, da die nach oben herausragenden Anschlußteile vor allem bei großem Verstellweg große Hubbewegungen ausführen, die bei unsachgemäßer Handhabung unter Umständen sogar zu Verletzungen des Bedienpersoals führen können.

Es ist daher die Aufgabe der vorliegenden Erfindung, eine Vorrichtung der eingangs genannten Art zu schaffen, die bei einfachem Aufbau funktionssicherer und verschleißärmer ist.

Diese Aufgabe wird dadurch gelöst, daß das Anschlußteil an dem an einer Handhabungseinrichtung festlegbaren ersten Ausgleichsteil vorgesehen ist, daß das in den Innenraum hineinragende Ausgleichsteil in dem Innenraum endet und abhängig von der jeweiligen Verschiebestellung in mehr oder weniger großem Abstand zur axial gegenüberliegenden Innenfläche des Innenraumes angeordnet ist, daß an dem einen Ausgleichsteil ein mit dessen Saug- oder Anschlußkanal kommunizierendes rohrförmiges Überbrückungsteil festgelegt ist, das durch zumindest einen Abschnitt des Innenraumes hindurch in den am anderen Ausgleichsteil vorgesehenen Anschluß- bzw. Saugkanal diesem gegenüber linear verschieblich und unter Abdichtung hineinragt, und daß das in den Innenraum hineinragende Ausgleichsteil einen Grundkörper aufweist, auf dessen stirnseitiger Endpartie in dem Innenraum eine von der Druckfeder beaufschlagte Verdrehsicherungshülse sitzt, die eine von der Kreisform abweichende Außenkontur aufweist, mit der sie in einem Abschnitt des Innenraumes mit komplementär konturierter seitlicher Innenfläche aufgenommen ist, wobei zwischen der Verdrehsicherungshülse und dem Grundkörper eine nach radial innen offene Ringkammer vorgesehen ist, die einen zur Abdichtung zwischen dem Überbrückungsteil und dem diesem gegenüber verschieblichen Ausgleichsteil dienenden Dichtungsring aufnimmt.

Wird nunmehr im Betrieb ein entsprechend ausgestatteter Vakuumsauger bewegt und/oder positioniert, so führen das Anschlußteil und das an der Handhabungseinrichtung festgelegte erste Ausgleichsteil einheitliche Bewegungen aus. Es finden also keine Relativbewegungen zwischen der an dem Ausgleichsteil angreifenden Handhabungseinrichtung und dem zugeordneten Anschlußteil statt. Dies hat den Vorteil, daß die entsprechenden Vakuumleitungen keinem erhöhten Verschleiß ausgesetzt sind und eine feste Verlegung vorgenommen werden kann. Es ergibt sich auch im Dauerbetrieb ein äußerst funktionssicherer und verschleißarmer Anschluß der Saugkammern des Saugnapfes an die Vakuumquelle. Im Innern der Vorrichtung überbrückt das rohrförmige Überbrückungsteil in jeder relativen Verschiebestellung der beiden Ausgleichsteile den zwischen diesen in dem Innenraum vorliegenden axialen Abstand. Das Vakuum kann auf direktem Wege leckfrei strömen. Durch die Abdichtung zwischen dem Überbrückungsteil und dem diesem gegenüber verschieblichen Ausgleichsteil ist gewährleistet, daß der Innenraum zu keiner Zeit mit der Vakuumquelle kommuniziert. Dadurch wird das Entstehen eines Unterdruckes in dem Innenraum vermieden, so daß die relative Beweglichkeit zwischen den beiden Ausgleichsteilen zu keiner Zeit beeinträchtigt wird. Letztlich ist das in den Innenraum hineinragende Ausgleichsteil jederzeit gut abgeschirmt, so daß keine herausragenden Teile vorhanden sind, von denen eine Verletzungsgefahr ausgehen könnte.

Infolge der Verdrehsicherung zwischen den beiden Ausgleichsteilen behalten angesaugte Gegenstände zu jedem Zeitpunkt ihre Winkellage bezüglich des mit der Handhabungseinrichtung verbundenen ersten Ausgleichsteils bei. Um die Verdrehsicherung zu realisieren, weist das in den Innenraum hineinragende Ausgleichsteil in dem hineinragenden stirnseitigen Bereich eine Verdrehsicherungshülse auf, die eine von der Kreisform abweichende Außenkontur besitzt, mit der sie in einem Abschnitt des Innenraumes aufgenommen ist, der mit einer komplementär konturierten seitlichen Innenfläche ausgestattet ist. Bevorzugt handelt es sich bei der Konturierung um eine solche nach Art eines Vielkeilprofiles.

Bei einer bevorzugten Ausführungsform ist das rohrförmige Überbrückungsteil an dem mit dem Anschlußteil ausgestatteten ersten Ausgleichsteil festgelegt, in dem zweckmäßigerweise auch der besagte Innenraum vorgesehen ist.

Nachfolgend wird die Erfindung anhand der beiliegenden Zeichnung näher erläutert. In dieser zeigen:
- Fig. 1: eine erste Bauform der erfindungsgemäßen Vorrichtung zur Hälfte im Längsschnitt, wobei ein Verbindungsteil einer Handhabungseinrichtung und ein Saugnapf lediglich strichpunktiert angedeutet sind,
- Fig. 2: einen Querschnitt durch die Vorrichtung aus Fig. 1 entlang Schnittlinie II-II, woraus eine bevorzugte Gestaltung der eine Verdrehsicherung gewährleistenden Mittel ersichtlich ist, und
- Fig. 3: einen Ausschnitt eines weiteren Ausführungsbeispiels im Längsschnitt.

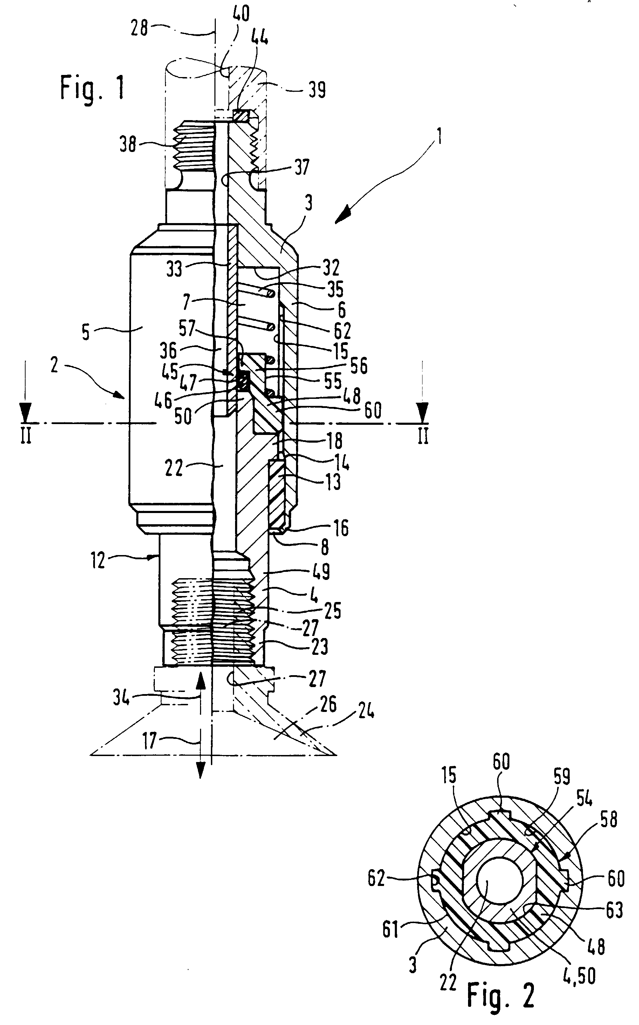

In Fig. 1 ist ein allgemein mit Bezugsziffer 1 bezeichneter Vakummsauger gezeigt, der mit einer dem Längenausgleich dienenden Vorrichtung 2 ausgestattet ist. Zu dieser gehören ein erstes Ausgleichsteil 3 und ein diesem gegenüber axial verschiebliches zweites Ausgleichsteil 4. Das erste Ausgleichsteil 3 umfaßt ein hülsenähnliches Gehäuse 5 mit beim Ausführungsbeispiel hohlzylindrischer seitlicher Seitenwand 6. In dem Gehäuse 5 ist ein Innenraum 7 ausgebildet, der in etwa zylindrisch konturiert ist und an der beim Ausführungsbeispiel nach unten weisenden Axialseite eine Öffnung 8 aufweist. Durch diese Öffnung 8 hindurch ragt das zweite Ausgleichsteil 4 in den Innenraum 7 koaxial hinein. Dieses zweite Ausgleichsteil 4 hat eine im wesentlichen rohrähnliche Gestalt und besitzt am Außenumfang einen zylindrisch konturierten Führungsabschnitt 12. Dieser arbeitet gleitend mit der Innenfläche einer vorzugsweise aus Kunststoff bestehenden Führungshülse 13 zusammen, die im Bereich der Öffnung 8 am Innenumfang der Seitenwand 8 des Gehäuses 5 axial unverschieblich festgelegt ist. Beim Ausführungsbeispiel ist die Führungshülse 13 bis zu einem Absatz 14 der seitlichen bzw. umfangsseitigen Innenfläche 15 des Gehäuses 5 in selbiges eingeschoben, wo sie durch den sie hintergreifenden, nach radial innen umgebogenen oder umgebördelten stirnseitigen Randbereich 16 der Seitenwand 6 fixiert ist. Auf diese Weise ist die Öffnung 8 insgesamt verschlossen.

Die gehäusefest fixierte Führungshülse 13 dient auch als Anschlag für die gemäß Pfeil 17 angedeutete lineare Ausfahrbewegung des zweiten Ausgleichsteiles 4 bezüglich des ersten Ausgleichsteiles 3. In der Grundstellung, die in Fig. 1 gezeigt ist, liegt ein insbesondere ringförmiger, nach radial außen ragender Vorsprung 18 des zweiten Ausgleichsteils 4 an der nach axial innen weisenden Stirnfläche der Führungshülse 13 an. Der Vorsprung 18 schließt sich insbesondere unmittelbar oberhalb des Führungsabschnittes 12 an diesen an.

Durch das zweite Ausgleichsteil 4 hindurch erstreckt sich insbesondere koaxial ein Saugkanal 22. Er mündet an den beiden einander entgegengesetzten Stirnseiten des zweiten Ausgleichsteils 4 aus, und zwar einerseits zum Innenraum 7 und andererseits, außen, zur Umgebung. An dem äußeren Endabschnitt 23 des zweiten Ausgleichsteils 4 läßt sich ein strichpunktiert angedeuteter Saugnapf 24 befestigen, der zweckmäßigerweise mit einem geeigneten Anschlußstutzen in den äußeren Endabschnitt des Saugkanals 22 einschraubbar ist. Auf diese Weise kommuniziert der von dem Saugnapf 24 begrenzte Saugraum 26 über einen Saugnapfkanal 27 direkt mit den Saugkanal 22.

Dem in den Innenraum 7 hineinragenden inneren Endabschnitt des zweiten Ausgleichsteils 4 liegt in Richtung der Längsachse 28 der Anordnung eine axiale Innenfläche 32 des Innenraumes 7 gegenüber, die zu dem ersten Ausgleichsteil 3 gehört. Ausgehend von dieser Innenfläche 32 erstreckt sich ein am ersten Ausgleichsteil 3 befestigtes rohrförmiges Überbrückungsteil 33 koaxial in den Innenraum 7 hinein in Richtung zu der Öffnung 8. Es endet noch innerhalb des Gehäuses 5 und ragt koaxial in den Saugkanal 22 hinein, dessen eine Mündung der axialen Innenfläche 32 zugewandt ist. Dabei überbrückt das Überbrückungsteil 33 den axialen Abstand zwischen der Innenfläche 32 und dem zweiten Ausgleichsteil 4.

Das zweite Ausgleichsteil 4 ist in Richtung der Längsachse 28 bezüglich dem ersten Ausgleichsteil 3 linear hin und her bewegbar. Es läßt sich also ausgehend von der in Fig. 1 gezeigten Grundstellung entgegen Pfeil 17 in den Innenraum 7 einfahren, wobei es sich an die axiale Innenfläche 32 annähert und an dieser letztlich sogar anliegen kann. Diese Einfahrbewegung ist durch Pfeil 34 gekennzeichnet. Das Überbrückungsteil 33 ragt unabhängig von der momentanen Stellung immer in den Saugkanal 22 hinein, einmal mehr und einmal weniger. Bei der Einfahrbewegung 34 wird eine als Rückstellfeder fungierende Druckfeder 35 komprimiert, die sich innerhalb des Innenraumes 7 befindet und sich zwischen den beiden Ausgleichsteilen 3,4, abstützt. Die Druckfeder 35 hält die beiden Ausgleichsteile 3,4 normalerweise in der der Grundstellung entsprechenden Konstellation.

Der das Übertragungsteil 33 in Längsrichtung durchziehende Rohrkanal 36 mündet einerseits über die freie Stirnseite des Überbrückungsteiles 33 in den Saugkanal 22. Andernends schließt sich an den Rohrkanal 36 ein als Anschlußkanal 37 bezeichneter Kanal an, der ein Anschlußteil 38 durchzieht, um zur Umgebung auszumünden. Das Anschlußteil 38 des Ausführungsbeispiels ist ein mit einem Gewinde ausgestatteter Anschlußstutzen, an dem ein strichpunktiert angedeutetes Verbindungsteil 39 einer sonst nicht weiter dargestellten Handhabungseinrichtung insbesondere lösbar festlegbar ist. Im festgelegten Betriebszustand ist das erste Ausgleichsteil 3 starr mit dem Verbindungsteil 39 gekoppelt, so daß es über die Handhabungseinrichtung beliebig bewegt und positioniert werden kann.

Der Anschlußkanal 37 läßt sich mit einer Vakuumquelle verbinden, beispielsweise ein entsprechender Speicher und/oder eine Vakuum erzeugende Einrichtung, beispielsweise eine Vakuumpumpe. Der Anschluß an diese Vakuumquelle erfolgt zweckmäßigerweise über das Verbindungsteil 39, das beim Ausführungsbeispiel einen zu der Vakuumquelle führenden Kanal 40 enthält, der im am Anschlußteil 38 befestigten Zustand des Verbindungsteils 39 mit dem Anschlußkanal 37 kommuniziert. Um im Anschlußbereich eine Leckage zu verhindern, kann ein Dichtring 44 zwischengefügt sein.

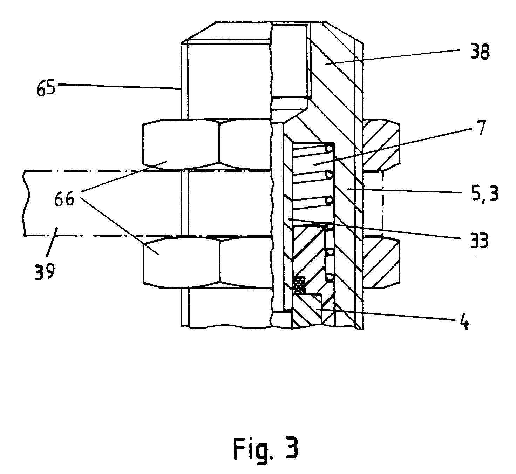

Wie aus Fig. 3 hervorgeht, kann das Überbrückungsteil 33 ein einstückiger Bestandteil des ersten Ausgleichsteils 3 sein. Beim Ausführungsbeispiel gemäß Fig. 1 handelt es sich jedoch um ein separates Bauteil, das in den Anschlußkanal 37 koaxial ein Stück weit eingesteckt oder eingepreßt ist. Der zugeordnete Mündungsbereich des Anschlußkanals 37 kann zu diesem Zweck erweitert sein.

Das Gehäuse 5 hat bevorzugt die in Fig. 1 gezeigte becherähnliche Gestalt, wobei die axiale Innenfläche 32 an der dem Boden entsprechenden Wandpartie ausgebildet ist. Das Anschlußteil 38 ragt ausgehend von diesem Bodenabschnitt koaxial nach oben in dem Innenraum entgegengesetzte Richtung.

Soll ein Gegenstand angehoben oder gehalten werden, so wird der Vakuumsauger 1 unter Vermittlung der Handhabungseinrichtung bzw. des Verbindungsteils 39 mit der offenen Seite des Saugnapfes 24 voraus auf den betreffenden Gegenstand aufgesetzt. Je nachdem, wie weit der Vakuumsauger 1 dabei an den Gegenstand angenähert wird, wird das zweite Ausgleichsteil 4 dabei mehr oder weniger weit gemäß Pfeil 34 in das Gehäuse 5 eingefahren. Gleichzeitig wird sich dabei das zweite Ausgleichsteil 4 mit seinem Saugkanal 22 weiter über das Überbrückungsteil 33 überschieben. Unabhängig von der sich ergebenden Stellung ist allerdings immer gewährleistet, daß eine durchgehende, zur Umgebung hin abgedichtete Fluidverbindung zwischen dem Kanal 40 und dem Saugraum 26 besteht. Auf diese Weise wird der handzuhabende Gegenstand unabhängig von der relativen Verschiebeposition zwischen den beiden Ausgleichsteilen 3,4 sicher angesaugt.

Die dichte Verbindung zwischen dem Überbrückungsteil 33 und dem ersten Ausgleichsteil 3 ist beim Ausführungsbeispiel durch die gewählte Einpreßverbindung gewährleistet. Des weiteren ist eine Abdichtung 45 vorgesehen, die zwischen dem Überbrückungsteil 33 und dem zweiten Ausgleichsteil 4 wirksam ist, ohne die beiden Teile an der Möglichkeit einer relativen Axialverschiebung zu hindern. Es handelt sich also um eine dynamische Abdichtung 45, die so plaziert ist, daß der Innenraum 7 bereits nicht mehr mit dem Saugkanal 22 bzw. dem Rohrkanal 36 kommuniziert. Auf diese Weise ist die Entstehung eines Unterdruckes in dem Innenraum 7 ausgeschlossen, der ein Ineinanderziehen beiden Ausgleichsteile 3,4 bewirken und zu Funktionsfehlern führen könnte.

Als Mittel zur Abdichtung ist beim Ausführungsbeispiel ein Dichtungsring 46 vorgesehen, der am zweiten Ausgleichsteil 4 mit diesem mitbewegbar festgelegt ist und am Außenumfang des Überbrückungsteiles 33 axial verschieblich anliegt. Er sitzt beispielsgemäß in einer nach radial innen offenen Ringkammer 47 des zweiten Ausgleichsteils 4 ein. Es kann sich z.B. um einen O-Ring oder einen Lippenring handeln.

Die Montage des Dichtungsringes 46 ist beim Ausführungsbeispiel besonders einfach. Der Grund liegt darin, daß die Ringkammer 47 im Trennbereich zweier separater Bestandteile des zweiten Ausgleichsteils 4 angeordnet ist. Einer dieser Bestandteile ist eine bevorzugt aus Kunststoffmaterial bestehende Verdrehsicherungshülse 48, die die stirnseitige Endpartie des in den Innenraum 7 hineinragenden Abschnittes des zweiten Ausgleichsteils 4 bildet. Der verbleibende Bestandteil des zweiten Ausgleichsteils 4 stellt einen Grundkörper 49 dar, auf den die Verdrehsicherungshülse 48 stirnseitig, von der axialen Innenfläche 32 her, aufgesetzt bzw. aufgesteckt ist. Der Grundkörper 49 besteht vorzugsweise aus Aluminiummaterial wie auch das erste Ausgleichsteil 3.

Die Aufsteckposition der Verdrehsicherungshülse 48 wird durch den in anderem Zusammenhang bereits erwähnten Vorsprung 18 vorgegeben, an dem die Verdrehsicherungshülse 48 axial anliegt. Dieser beispielsgemäß ringförmige Vorsprung 18 bildet mit einem sich anschließenden stutzenähnlichen Zentriervorsprung 50 eine Ringstufe als Anschlag für die Verdrehsicherungshülse. Letztere sitzt formschlüssig auf der Umfangsfläche 54 des Zentriervorsprunges 50, der zugleich die eine axiale Endpartie des Grundkörpers 49 bildet. Da die Umfangsfläche 54 von der Kreisform abweicht, sind die Verdrehsicherungshülse 48 und der Grundkörper 49 einander gegenüber unverdrehbar festgelegt. Beispielsgemäß hat die Umfangsfläche 54 die Gestalt einer an zwei diametral gegenüberliegenden Stellen abgeflachten Zylinderfläche. Allerdings wären auch andere Konturierungen möglich, beispielsweise ein Mehrkant- oder Vielkeilprofil von insbesondere der Art, wie es zwischen der Verdrehsicherungshülse 48 und dem Ausgleichsteil 3 vorgesehen ist. Es ist beim Ausführungsbeispiel ferner vorgesehen, daß die Verdrehsicherungshülse 48 in Axialrichtung fest auf dem Grundkörper 49 sitzt. Der nötige Halt ergibt sich zweckmäßigerweise durch einen Preßsitz. Die Druckfeder 35 beaufschlagt die Verdrehsicherungshülse 48 in Richtung der Ausfahrbewegung 17, wobei die Gegenkraft in der Grundstellung von dem sich gehäusefest abstützenden Vorsprung 18 geliefert wird.

Die Druckfeder 35 ist bevorzugt eine Schraubenfeder, die sich einerseits an der axialen Innenfläche 32 abstützt. Ihr Durchmesser ist etwas geringer als derjenige des Innenraumes 7. An der Verdrehsicherungshülse 48 ist radial außen eine zur axialen Innenfläche 32 hin offene ringförmige Aussparung 55 vorgesehen, in der die Druckfeder 35 einsitzt, um sich an der der Innenfläche 32 zugewandten axialen Begrenzungsfläche dieser Aussparung 55 abzustützen.

Auf diese Weise ragt ein hülsenähnlicher Zentrieransatz 56 der Verdrehsicherungshülse 48 koaxial ein Stück weit ins Innere der Druckfeder 45 hinein. Dieser Zentrieransatz 56 ist es auch, der beim Ausführungsbeispiel die Einfahrbewegung 34 begrenzt, indem er auf die axiale Innenfläche 32 auflaufen kann.

Mit ihrem Zentrieransatz 56 überragt die Verdrehsicherungshülse 48 den Grundkörper 49 in Axialrichtung. Eine Partie 57 des Zentrieransatzes 56 ist dabei dem Zentriervorsprung 50 des Grundkörpers 49 mit Abstand vorgelagert. Der sich ergebende Zwischenraum stellt die oben erwähnte Ringkammer 47 dar, die mithin in der Verdrehsicherungshülse 48 ausgenommen ist. Die axial innen liegende und die umfangsseitige Ringkammerwand werden jeweils von der Verdrehsicherungshülse 48 gebildet. Hingegen wird die axial außen liegende Ringkammerwand von der Stirnfläche des Zentriervorsprunges 50 gebildet.

Bei der Montage ist nurmehr der Dichtungsring 46 in die bei abgenommener Verdrehsicherungshülse 48 offene Ringkammer 47 einzulegen, wonach beide Teile gemeinsam auf den Grundkörper 49 aufzusetzen sind.

Damit angesaugte Gegenstände beim Bewegen des Vakuumsaugers 1 ihre Relativposition bezüglich des letzteren nicht verändern,sind die beiden Ausgleichsteile 3,4 einander gegenüber unverdrehbar fixiert. Als Mittel zur Verdrehsicherung arbeiten dabei zum einen die Verdrehsicherungshülse 48 und zum andern die umfangsseitige Gehäusewand 6. Beim Ausführungsbeispiel ist die Verdrehsicherungshülse 48 in der sich an die Aussparung 55 axial anschließenden Partie mit einer Außenkontur 58 versehen, die von der Kreisform abweicht. Eine hierzu komplementäre Innenkontur 59 besitzt die seitliche Gehäusewand 6 entlang eines zumindest dem maximalen Verstellweg des zweiten Ausgleichsteils 4 entsprechenden Längenabschnittes. Auf diese Weise greifen die beiden Ausgleichsteile 3,4 formschlüssig und axial verschieblich ineinander.

Als bevorzugtes Verdrehsicherungsprofil hat sich ein Vielkeilprofil erwiesen, wie es beispielsweise aus Fig. 2 hervorgeht. Hier besitzt die Verdrehsicherungshülse 48 mehrere in Umfangsrichtung insbesondere gleichmäßig verteilt angeordnete Führungsrippen 60, zwischen denen sich jeweils im Querschnitt kreisbogenförmig konturierte Flächenabschnitte 61 erstrecken. Entsprechend sind innen an der Gehäusewand 6 zu den Rippen 6 komplementäre Vertiefungen 62 ausgenommen, die sich in Verschieberichtung erstrecken und die ebenfalls über kreisbogenförmig konturierte Flächenabschnitte aneinander anschließen. Die axial gemessene Länge der Rippen 60 ist geringer als diejenige der Vertiefungen 62, so daß der erforderliche axiale Verschiebeweg gewährleistet ist.

Da die Verdrehsicherungshülse 48 bevorzugt aus Kunststoffmaterial besteht, kann sie sehr verschleißarm in dem Gehäuse 5 gleiten.

Es ist beim Ausführungsbeispiel von Vorteil, daß beim Festlegen des Anschlußteils 38 an der Handhabungseinrichtung bzw. dem Verbindungsteil 39 automatisch die Fluidverbindung zwischen dem Anschlußkanal 37 und dem zur Vakuumquelle führenden Kanal 40 hergestellt wird. Dies erleichtert die Montage erheblich. Die Vakuumzufuhr kann unmittelbar durch das Verbindungsteil 39 hindurch erfolgen.

Der grundsätzliche Aufbau des Ausführungsbeispiels gemäß Fig. 3 entspricht demjenigen der Fig. 1 und 2, weshalb die einander entsprechenden Bauteile mit identischen Bezugszeichen versehen wurden und auf die zugehörigen obigen Beschreibungsteile verwiesen werden kann. Im Unterschied zur Bauform gemäß Fig. 1 und 2 ist das rohrförmige Überbrückungsteil 33 einstückig mit dem Anschlußteil 3 ausgebildet. Ferner ist als Anschlußteil 38 unmittelbar der dem zweiten Ausgleichsteil 4 entgegegengesetzte stirnseitige Endbereich des Gehäuses 5 vorgesehen, der praktisch gleichzeitig den Boden des Innenraumes 7 bildet. Zur Befestigung eines strichpunktiert angedeuteten Verbindungsteils 39 ist am Außenumfang des zylindrisch konturierten zweiten Ausgleichsteils 4 bzw. des Gehäuses 5 ein Außengewinde 65 vorgesehen, das sich zumindest annähernd über die gesamte Länge des zweiten Ausgleichsteils 4 erstrecken kann und sich insbesondere auch entlang derjenigen Partie des zweiten Ausgleichsteils 4 erstrecken kann, die das Anschlußteil 38 bildet. Auf dem Außengewinde 65 können Befestigungsmuttern 66 angebracht werden, von denen beispielsgemäß zwei Stück vorhanden sind, zwischen denen sich das Verbindungsteil 39 lösbar festspannen läßt.

## Patentansprüche

1. Vorrichtung für den Längenausgleich von Vakuumsaugern, mit einem ersten Ausgleichsteil (3) und einem zweiten Ausgleichsteil (4), die einander gegenüber verdrehgesichert sind, wobei eines der Ausgleichsteile (3) einen Innenraum (7) aufweist, in den das andere Ausgleichsteil (4) linear verschieblich hineinragt, und in dem eine sich zwischen den Ausgleichsteilen (3, 4) abstützende Druckfeder (35) angeordnet ist, und wobei das erste Ausgleichsteil (3) an einer Handhabungseinrichtung (39) festlegbar ist und das zweite Ausgleichsteil (4) einen Saugkanal (22) enthält und mit einem Saugnapf (24) verbindbar ist, und mit einem Anschlußteil (38), das einen Anschlußkanal (37) aufweist, der mit einer Vakuumquelle verbindbar ist und in jeder von den beiden Ausgleichsteilen (3, 4) eingenommenen relativen Verschiebestellung mit dem Saugnapf (24) kommuniziert, dadurch gekennzeichnet, das das Anschlußteil (38) an dem an einer Handhabungseinrichtung (39) festlegbaren ersten Ausgleichsteil (3) vorgesehen ist, daß das in den Innenraum (7) hineinragende Ausgleichsteil (4) in dem Innenraum (7) endet und abhängig von der jeweiligen Verschiebestellung in mehr oder weniger großem Abstand zur axial gegenübeliegenden Innenfläche (32) des Innenraumes (7) angeordnet ist, daß an dem einen Ausgleichsteil (3) ein mit dessen Saug- oder Anschlußkanal (22, 37) kommunizierendes rohrförmiges Überbrückungsteil (33) fest angeordnet ist, das durch zumindest einen Abschnitt des Innenraumes (7) hindurch in den am anderen Ausgleichsteil (4) vorgesehenen Anschluß- bzw. Saugkanal (37, 22) diesem gegenüber linear verschieblich und unter Abdichtung hineinragt, und daß das in den Innenraum (7) hineinragende Ausgleichsteil (4) einen Grundkörper (49) aufweist, auf dessen stirnseitiger Endpartie (50) in dem Innenraum (7) eine von der Druckfeder (35) beaufschlagte Verdrehsicherungshülse (48) sitzt, die eine von der Kreisform abweichende Außenkontur aufweist, mit der sie in einem Abschnitt des Innenraumes (7) mit komplementär konturierter seitlicher Innenfläche (15) aufgenommen ist, wobei zwischen der Verdrehsicherungshülse (48) und dem Grundkörper (49) eine nach radial innen offene Ringkammer (47) vorgesehen ist, die einen zur Abdichtung zwischen dem Überbrückungsteil (33) und dem diesem gegenüber verschieblichen Ausgleichsteil (4) dienenden Dichtungsring (46) aufnimmt.

2. Vorrichtung nach Anspruch 1, dadurch gekennzeichnet, daß das Überbrückungsteil (33) einstückig mit dem es tragenden Ausgleichsteil (3) ausgebildet ist.

3. Vorrichtung nach Anspruch 1 oder 2, dadurch gekennzeichnet, daß das rohrförmige Überbrückungsteil (33) an dem mit dem Anschlußteil (38) ausgestatteten ersten Ausgleichsteil (3) angeordnet ist.

4. Vorrichtung nach einem der Ansprüche 1 bis 3, dadurch gekennzeichnet, daß der Innenraum (7) in dem mit dem Anschlußteil (38) ausgestatteten ersten Ausgleichsteil (3) ausgebildet ist.

5. Vorrichtung nach einem der Ansprüche 1 bis 4, dadurch gekennzeichnet, daß an der umfangsseitigen Innenfläche (15) des Innenraumes (7), insbesondere im Öffnungsbereich, eine Führungshülse (13) festgelegt ist, die das hineinragende Ausgleichsteil (4) koaxial umschließt.

6. Vorrichtung nach einem der Ansprüche 1 bis 5, dadurch gekennzeichnet, daß die Verdrehsicherungshülse (48) aus Kunststoffmaterial besteht.

7. Vorrichtung nach einem der Ansprüche 1 bis 6, dadurch gekennzeichnet, daß die Innenkontur (59) der seitlichen Innenfläche (15) und die Außenkontur (58) der Verdrehsicherungshülse (48) nach Art eines Vielkeilprofiles ausgebildet sind.

8. Vorrichtung nach einem der Ansprüche 1 bis 7, dadurch gekennzeichnet, daß die Verdrehsicherungshülse (48) im Rahmen einer Steckverbindung koaxial an dem Grundkörper (49) des zugehörigen Ausgleichsteils (4) angeordnet ist.

9. Vorrichtung nach Anspruch 8, dadurch gekennzeichnet, daß die Verdrehsicherungshülse (48) radial innen einen unkreisförmig konturierten Sitzabschnitt (63) aufweist, mit dem sie auf der komplementär konturierten Endpartie (50) des Grundkörpers (49) sitzt.

10. Vorrichtung nach Anspruch 8 oder 9, dadurch gekennzeichnet, daß sich die Verdrehsicherungshülse (48) an einer z.B. von einem Radialflansch (18) gebildeten Ringstufe des zugehörigen Ausgleichsteils (4) abstützt.

11. Vorrichtung nach einem der Ansprüche 1 bis 10, dadurch gekennzeichnet, daß das Anschlußteil von einer axialen Endpartie des zugeordneten Ausgleichsteiles (3) gebildet ist.

## Claims

1. Device for the length compensation of suction holders, with a first compensating part (3) and a second compensating part (4), secured against twisting relative to one another, wherein one of the compensating parts (3) has an inner space (7) into which the other compensating part (4) extends with linear movement capability and in which is mounted a compression spring (35) supported between the compensating parts (3, 4), and wherein the first compensating part may be fixed to a handling device (39) and the second compensating part (4) contains a suction channel (22) and may be connected to a suction cup (24), and with a connection part (38) which has a connection channel (37) connectable to a vacuum source and communicating with the suction cup (24) in each of the relative traverse positions assumed by the two compensating parts (3, 4), characterized in that the connection part (38) is provided on the first compensating part (3) which can be fixed to a handling device (39), that the compensating part (4) extending into the inner space (7) terminates in the inner space (7) and, depending on the respective traverse position, is located with more or less clearance from the axially opposite inner face (32) of the inner space (7), that permanently mounted on the one compensating part (3) is a tubular bridging part (33) communicating with its suction or connection channel (22, 37) and extending under sealing through at least one section of the inner space (7) into the connection or suction channel (37, 22) provided at the other compensating part (4), with linear movement capability relative to the said channel, and that the compensating part (4) extending into the inner space (7) has a body (49), on the end-face end section (50) of which is seated in the inner space (7) an anti-twist sleeve (48) acted upon by a compression spring (35) and having an external contour deviating from the circular form, by which it is held in a section of the inner space (7) with a side inner face (15) of complementary contour, wherein an annular chamber (47) open radially inwards is provided between the anti-twist sleeve (48) and the body (49), and accomodates a seal ring (46) which serves to seal between the bridging part (33) and the compensating part (4) which is capable of movement relative to the former.

2. Device according to claim 1, characterized in that the bridging part (33) is designed as one piece with the compensating part (3) which supports it.

3. Device according to claim 1 or 2, characterized in that the tubular bridging part (33) is mounted on the first compensating part provided with the connection part (38).

4. Device according to any of claims 1 to 3, characterized in that the inner space (7) is formed in the first compensating part provided with the connection part (38).

5. Device according to any of claims 1 to 4, characterized in that a guide sleeve (13) is fixed to the circumferential-side inner face (15) of the inner space (7), in particular in the opening area, and coaxially surrounds the inwards-extending compensating part (4).

6. Device according to any of claims 1 to 5, characterized in that the anti-twist sleeve (48) is made of plastic material.

7. Device according to any of claims 1 to 6, characterized in that the inside contour (59) of the side inner face (15) and the outside contour (58) of the anti-twist sleeve (48) are designed in the form of multiple splines.

8. Device according to any of claims 1 to 7, characterized in that the anti-twist sleeve (48) is mounted coaxially on the base (49) of the associated compensating part (4) as part of a push-in connection.

9. Device according to claim 8, characterized in that the anti-twist sleeve (48) has on its radial inner side a bearing section (63) of non-circular contour, by which it rests on the end section (50) of the base (49) with a complementary contour.

10. Device according to claim 8 or 9, characterized in that the anti-twist sleeve (48) rests on an annular step of the associated compensating part (4) formed e.g. by a radial flange (18).

11. Device according to any of claims 1 to 10, characterized in that the connection part is formed by one axial end section of the associated compensating part (3).

## Revendications

1. Dispositif pour la compensation de longueur de suceurs à vide, avec une première partie de compensation (3) et une seconde partie de compensation (4), qui sont bloquées en rotation l'une par rapport à l'autre, dans lequel l'une des parties de compensation (3) présente un volume intérieur (7), dans lequel l'autre partie de compensation (4) pénètre en coulissant linéairement, et dans lequel est placé un ressort de compression (35) prenant appui entre les parties de compensation (3, 4), et dans lequel la première partie de compensation (3) peut être fixée sur un dispositif de manipulation (39) et la seconde partie de compensation (4) contient un canal d'aspiration (22) et peut être reliée à une ventouse (24), et avec un élément de raccord (38), qui comporte un canal de raccord (37), qui peut être relié à une source de vide et communique avec la ventouse (24) dans chaque position de déplacement relative prise par les deux parties de compensation (3, 4), caractérisé en ce que l'élément de raccord (38) est prévu sur la première partie de compensation (3) à fixer sur un dispositif de manipulation (39), en ce que la partie de compensation (4) pénétrant dans le volume intérieur (7) se termine dans le volume intérieur (7) et est placée, indépendamment de la position de déplacement respective, à plus ou moins grande distance de la surface intérieure (32) axialement opposée du volume intérieur (7), en ce que sur une partie de compensation (3) est fixé un élément de pontage (33) tubulaire communiquant avec le canal d'aspiration ou le canal de raccord (22, 37) de cette partie, qui pénètre à travers au moins une portion du volume intérieur (7), dans le canal de raccord ou le canal d'aspiration (37, 22) prévu sur l'autre partie de compensation (4), de manière à coulisser linéairement par rapport à ce canal, et avec étanchéité, et en ce que la partie de compensation (4), pénétrant dans le volume intérieur (7), présente un corps de base (49), sur la partie d'extrémité (50) frontale duquel se trouve, dans le volume intérieur (7), une douille de blocage de rotation (48) sollicitée par le ressort de compression (35), douille qui présente un contour extérieur différent de la forme circulaire, avec lequel elle est logée dans une portion du volume (7) avec surface intérieure latérale (15) de contour complémentaire, une chambre annulaire (47), ouverte radialement vers l'intérieur, étant prévue entre la douille de blocage de rotation (48) et le corps de base (49), chambre annulaire qui loge une bague d'étanchéité (46) servant à l'étanchéité entre l'élément de pontage (33) et la partie de compensation (4) coulissant par rapport à celui-ci.

2. Dispositif selon la revendication 1, caractérisé en ce que l'élément de pontage (33) est réalisé d'une seule pièce avec la partie de compensation (3) le portant.

3. Dispositif selon la revendication 1 ou 2, caractérisé en ce que l'élément de pontage (33) tubulaire est situé sur la première partie de compensation (3), équipée de l'élément de raccord (38).

4. Dispositif selon l'une des revendications 1 à 3, caractérisé en ce que le volume intérieur (7) est formé dans la première partie de compensation (3), équipée de l'élément de raccord (38).

5. Dispositif selon l'une des revendications 1 à 4, caractérisé en ce que sur la surface intérieure (15) périphérique du volume intérieur (7), en particulier dans la zone d'ouverture, est fixée une douille de guidage (13), qui entoure coaxialement la partie de compensation (4) pénétrant à l'intérieur.

6. Dispositif selon l'une des revendications 1 à 5, caractérisé en ce que la douille de blocage de rotation (48) est en matière plastique.

7. Dispositif selon l'une des revendications 1 à 6, caractérisé en ce que le contour intérieur (59) de la surface intérieure latérale (15) et le contour extérieur (58) de la douille de blocage de rotation (48) sont conformés à la manière d'un profil formant des clavettes multiples.

8. Dispositif selon l'une des revendications 1 à 7, caractérisé en ce que la douille de blocage de rotation (48) est placée, dans le cadre d'un assemblage à emboîtement, coaxialement sur le corps de base (49) de la partie de compensation (4) correspondante.

9. Dispositif selon la revendication 8, caractérisé en ce que la douille de blocage de rotation (48) présente radialement à l'intérieur une portion de calage (63), de contour non circulaire, par laquelle elle est calée sur la partie d'extrémité (50), de contour complémentaire, du corps de base (49).

10. Dispositif selon la revendication 8 ou 9, caractérisé en ce que la douille de blocage de rotation (48) prend appui contre un épaulement annulaire, formé par exemple par une bride radiale (18), de la partie de compensation (4) correspondante.

11. Dispositif selon l'une des revendications 1 à 10, caractérisé en ce que l'élément de raccord est formé par une partie d'extrémité axiale de la partie de compensation (3) correspondante.
